# EUROPÄISCHE PATENTSCHRIFT

(11) **EP 1 064 160 B1**
(45) Veröffentlichungstag und Bekanntmachung des Hinweises auf die Patenterteilung: **03.07.2002**
(21) Anmeldenummer: 99924688.7
(22) Anmeldetag: 19.03.1999
(51) Int. Cl.: B60C 27/00

(54) **GLEITSCHUTZVORRICHTUNG**
ANTISLIPPING DEVICE
DISPOSITIF ANTIDERAPANT

(30) Priorität: 20.03.1998 DE 19813831
(43) Veröffentlichungstag der Anmeldung: 03.01.2001
(73) Patentinhaber: RUD-KETTENFABRIK RIEGER & DIETZ GMBH U. CO., 73432 Aalen-Unterkochen (DE)
(72) Erfinder: DEGER, Werner, D-73466 Lauchheim (DE); KAISER, Helmut, D-73432 Aalen-Unterkochen (DE); SCHAFFERT, Thilo, Ernst, D-74423 Obersontheim (DE); LIESCH, Eugen, D-73432 Aalen-Unterkochen (DE)
(74) Vertreter: Böning, Manfred, Prof.Dr.-Ing.
(86) Internationale Anmeldenummer: DE9900913
(87) Internationale Veröffentlichungsnummer: WO9947370

(56) Entgegenhaltungen:
- US-A- 3 945 162

## Beschreibung

Die Erfindung betrifft eine Gleitschutzvorrichtung mit einem Laufnetz, das über Anschlußorgane an mehreren Anschlußstellen mit einer inneren Halterung und einer im Bereich ihres Umfangs als Scheibe ausgebildeten äußeren Halterung verbunden ist, wobei die der äußeren Halterung zugeordneten Anschlußorgane als senkrecht zur Reifenflanke orientierte Endglieder von Kettenstrangstücken ausgebildet sind.

Eine Gleitschutzvorrichtung der vorstehenden Art ist in der deutschen Patentanmeldung 19702815.2-16 offenbart. Bei der bekannten Gleitschutzvorrichtung werden die Anschlußorgane von Endgliedern schräg zur Abrollrichtung des Fahrzeugrades verlaufender Kettenstrangabschnitte des Laufnetzes gebildet. Die Endglieder greifen dabei mit ihren Bugen in Löcher, die in unmittelbarer Nähe des Außenrandes der Scheibe in letzterer angeordnet sind. Der für die Verbindung der Scheibe mit dem Laufnetz erforderliche fertigungstechnische Aufwand ist bei dieser Lösung erheblich und schwer mit dem Massenartikelcharakter von Gleitschutzvorrichtungen in Einklang zu bringen. Eine schnellere und einfachere Verbindung läßt sich dadurch erreichen, daß man als Anschlußorgane sogenannte Seitenhaken verwendet, letztere müssen, wie beispielsweise aus der WO 81/02870 bekannt, ihrerseits aber zunächst mit den Endgliedern der Kettenstrangabschnitte des Laufnetzes verbunden werden. Als Anschlußorgane kämen darüber hinaus noch Doppel- und Karabinerhaken der aus der DE 34 27 604 A1 bekannten Art in Betracht, die allerdings unverhältnismäßig teuer sind.

Aus der gattungsbildenden DE 42 25 802 C2 ist schließlich ein aus einer ringförmigen Scheibe bestehender Felgenschutz bekannt, bei der die Scheibe an ihrer Außenseite mit gleichmäßig über den Scheibenumfang verteilten Halteklipsen versehen ist, in die Abschnitte einer von einer geschlossenen Seitenkette gebildeten äußeren Halterung einklipsbar sind. An eine Nutzung der Scheibe als Teil einer äußeren Halterung ist in diesem Fall indes nicht gedacht, es wird vielmehr auf eine Lösbarkeit des Felgenschutzes von der eigentlichen Gleitschutzvorrichtung Wert gelegt.

Der Erfindung liegt die Aufgabe zugrunde, eine Gleitschutzvorrichtung der in Betracht gezogenen Art zu schaffen, bei der sich das Laufnetz auf besonders wirtschaftliche Art und Weise mit der äußeren Halterung verbinden läßt und bei der die Art der Verbindung die Möglichkeit einer Verwendung gleicher Laufnetze für Reifen eröffnet, deren Größe innerhalb eines gewissen Bereiches variiert. Diese Aufgabe wird erfindungsgemäß dadurch gelöst, daß die der äußeren Halterung zugeordneten Endglieder mit Halteankern verbunden sind, die von Abschnitten eines Drahtes gebildet werden, der jeweils beidseits der jeweiligen Anschlußstelle in Führungskanälen geführt und gehalten wird, die in der Nähe des äußeren Randes der Scheibe angeordnet sind.

Die erfindungsgemäße Gleitschutzvorrichtung bietet den Vorteil, daß die Halteanker problemlos in die lichten Innenräume der Endglieder einführbar und die sie bildenden Drahtabschnitte entweder gleichzeitig oder nachträglich in die Führungskanäle schiebbar sind, in denen sie reibungs- und/oder formschlüssig oder durch Federkraft gehalten werden. Mit Hilfe unterschiedlich geformter Halteanker kann eine Anpassung der Gleitschutzvorrichtung an verschiedene Reifengrößen vorgenommen werden.

Weitere Einzelheiten und Merkmale der Erfindung ergeben sich aus den Unteransprüchen und der nachstehenden Beschreibung einer in der beigefügten Zeichnung dargestellten, besonders vorteilhaften Ausführungsform der Erfindung. Es zeigen:
- Fig. 1: schräg von vorn betrachtet, eine auf einen Fahrzeugreifen montierte Gleitschutzvorrichtung,
- Fig. 2: einen Schnitt längs der Linie II - II in Fig. 1,
- Fig. 3: schräg von hinten betrachtet, die Gleitschutzvorrichtung gemäß Fig. 1, und
- Fig. 4: eine Modifikation der Gleitschutzvorrichtung gemäß Fig. 1.

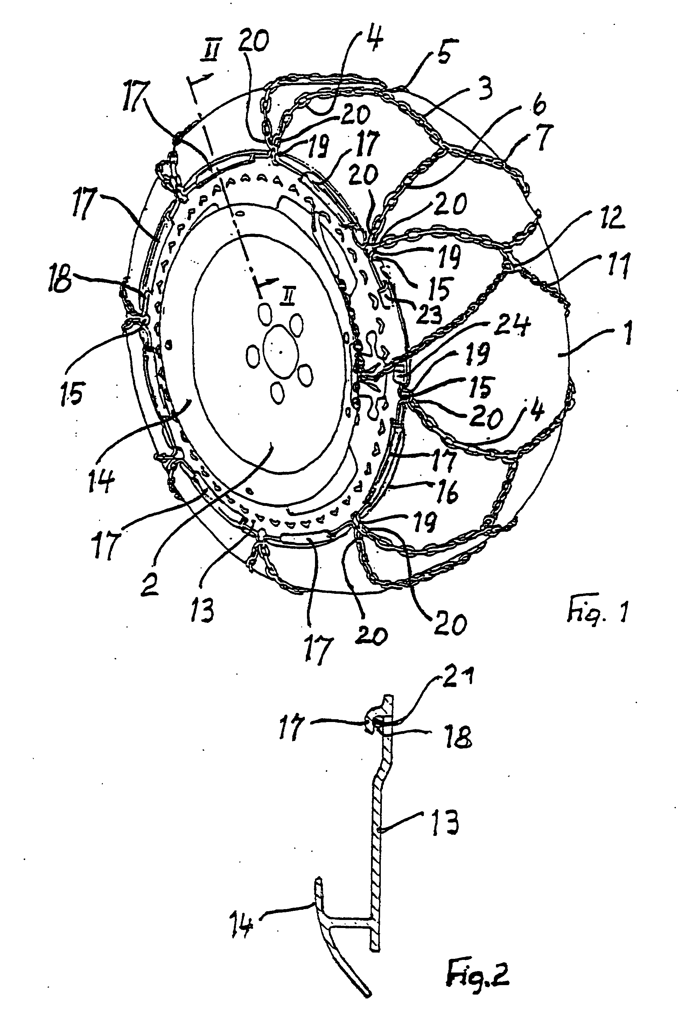

In Fig. 1 ist 1 ein Fahrzeugreifen, der auf eine Leichtmetallfelge 2 aufgezogen und mit einer Gleitschutzvorrichtung ausgestattet ist, deren Laufnetz im wesentlichen aus in Reifenumfangsrichtung aufeinanderfolgenden Spurkreuzen besteht, von denen ein jedes von einem Längskettenstrangstück 3 und vier Schrägkettenstrangstücken 4, 5, 6, 7 gebildet wird. Die Schrägkettenstrangstücke 5 und 7 sind in bekannter Weise mit einer inneren Halterung 8 verbunden, die von einem Federstahlbügel gebildet wird, dessen Enden 9 und 10 durch einen Spannstrang 11 miteinander verbunden sind, der über die Lauffläche des Reifens 1 zur äußeren Halterung der Gleitschutzvorrichtung geführt ist, wobei er eine Führungsöse 12 passiert.

Zur äußeren Halterung gehören eine im wesentlichen ringförmige Scheibe 13 und ein mit dieser verbundener Verwahrring 14. Beide vorgenannten Teile sind zweckmäßigerweise als Kunststoff-Spritzgußteile ausgebildet. In der Nähe ihres mit Aussparungen 15 versehenen äußeren Randes 16 weist die Scheibe 13 äquidistant zum äußeren Rand 16 verlaufende Führungskanäle 17 mit einem im wesentlichen L-förmigen Querschnitt auf. Die Führungskanäle 17 dienen zur Halterung eines bugelförmigen Drahtes 18, der im Bereich der Aussparungen 15 gekröpfte Abschnitte aufweist, die Halteanker 19 für Anschlußorgane formen, die im dargestellten Fall aus senkrecht zur Flanke des Reifens 1 orientierten Endgliedern 20 der Schrägkettenstrangstücke 4 und 6 bestehen.

Wie aus Fig. 2 erkennbar, werden die Führungskanäle 17 von im wesentlichen L-förmigen Stegen gebildet, deren parallel zur Scheibe 13 verlaufende Schenkel eine Rastmulde 21 für den Draht 18 aufweisen. Der Draht 18 wird aufgrund einer gewissen Elastizität der die Führungskanäle 17 bildenden Stege kraft- und formschlüssig in seiner Position gehalten. Die beschriebene Ausbildung der Führungskanäle erlaubt es, anstelle eines durchgehenden Drahtes 18 auch kurze Drahtstücke zu verwenden. Als besonders günstig erweist sich jedoch der Einsatz eines Drahtes, der, ebenso wie die innere Halterung 8 der Gleitschutzvorrichtung, als Federstahlbügel ausgebildet ist.

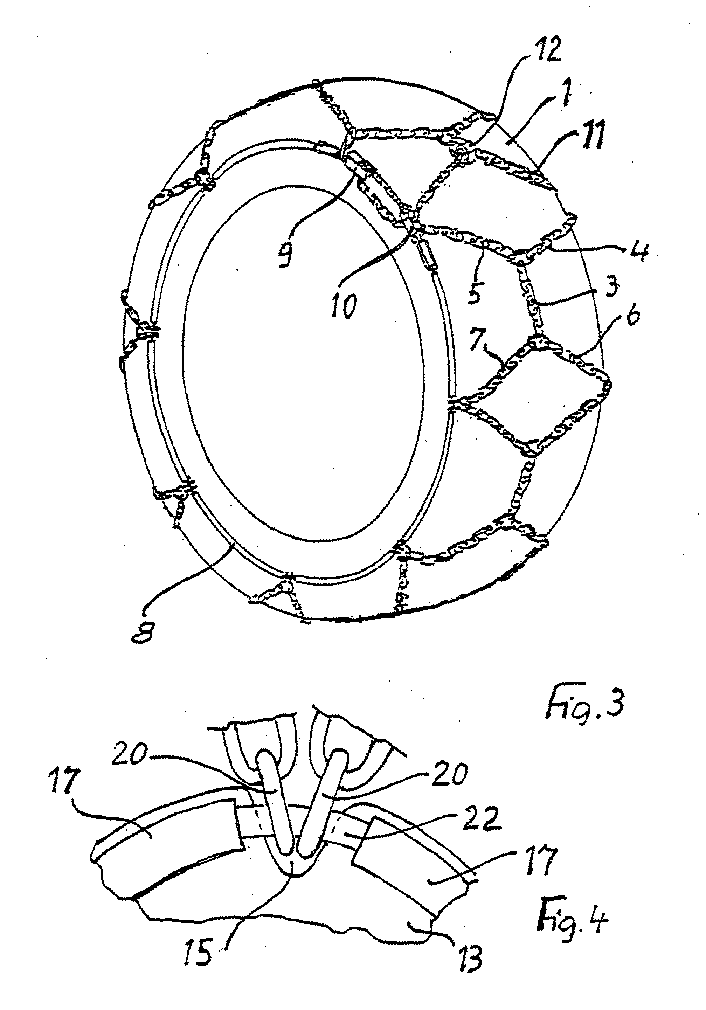

Anstelle von Halteankern 19, die wie bei den in den Fig. 1 bis 3 gezeigten Ausführungsformen gekröpft sind, lassen sich auch Halteanker 22 verwenden, die, wie in Fig. 4 dargestellt, nur leicht gekrümmt, parallel zum Außenrand 16 der Scheibe verlaufen und den Einsatz der Gleitschutzvorrichtung auf einem kleineren Reifen erlauben.

Um sicherzustellen, daß der Draht 18 sich nicht gegenüber der Scheibe 13 verdreht, sind im Bereich der Enden des Drahtes 18 Drehbewegungen verhindernde, auf die Stirnflächen der Drahtenden einwirkende Endanschläge 23 und 24 angeordnet.

## Patentansprüche

1. Gleitschutzvorrichtung mit einem Laufnetz, das über Anschlußorgane an mehreren Anschlußstellen mit einer inneren Halterung (8) und einer im Bereich ihres Umfangs als Scheibe (13) ausgebildeten äußeren Halterung verbunden ist, wobei die der äußeren Halterung zugeordneten Anschlußorgane als senkrecht zur Reifenflanke orientierte Endglieder (20) von Kettenstrangstükken (4, 6) ausgebildet sind, **dadurch gekennzeichnet, daß** die der äußeren Halterung zugeordneten Endglieder (20) mit Halteankern (19) verbunden sind, die von Abschnitten eines Drahtes (18) gebildet werden, der jeweils beidseits der jeweiligen Anschlußstelle in Führungskanälen (17) geführt und gehalten wird, die in der Nähe des äußeren Randes (16) der Scheibe (13) angeordnet sind.

2. Gleitschutzvorrichtung nach Anspruch 1, **dadurch gekennzeichnet, daß** sämtliche Halteanker (19) von Abschnitten eines durchgehenden bügelförmigen Drahtes (18) gebildet werden, auf den die Endglieder (20) aufgefädelt sind.

3. Gleitschutzvorrichtung nach Anspruch 1, **dadurch gekennzeichnet, daß** die Halteanker von Abschnitten einzelner kurzer Drahtstücke gebildet werden.

4. Gleitschutzvorrichtung nach Anspruch 2 oder 3, **dadurch gekennzeichnet, daß** die Scheibe (13) im Bereich der Halteanker (19) mit zum Scheibenumfang offenen Aussparungen (15) versehen ist.

5. Gleitschutzvorrichtung nach einem oder mehreren der Ansprüche 1 bis 4, **dadurch gekennzeichnet, daß** die zum Zentrum der Scheibe (13) hin offenen Führungskanäle (17) von in konstantem Abstand vom Außenrand (16) der Scheibe (13) verlaufenden Stegen mit einem im wesentlichen L-förmigen Querschnitt gebildet werden.

6. Gleitschutzvorrichtung nach Anspruch 5, **dadurch gekennzeichnet, daß** ein im wesentlichen parallel zur Außenseite der Scheibe (13) verlaufender Schenkel der die Führungskanäle (17) bildenden Stege mit einer Rastmulde (21) für Abschnitte des Drahtes (18) versehen ist.

7. Gleitschutzvorrichtung nach einem oder mehreren der Ansprüche 1 bis 6, **dadurch gekennzeichnet, daß** die Halteanker (19) bildenden Drahtabschnitte gekröpft sind.

8. Gleitschutzvorrichtung nach einem oder mehreren der Ansprüche 1 bis 6, **dadurch gekennzeichnet, daß** die die Halteanker (22) bildenden Drahtabschnitte parallel zum Außenrand (16) der Scheibe (13) verlaufen.

9. Gleitschutzvorrichtung nach einem oder mehreren der Ansprüche 1 bis 8, **dadurch gekennzeichnet, daß** das Laufnetz in Reifenabrollrichtung aufeinanderfolgende Spurkreuze aufweist, die aus jeweils einem Längskettenstrangstück (3) und vier Schrägkettenstrangstücken (4, 5, 6, 7) bestehen.

10. Gleitschutzvorrichtung nach Anspruch 8, **dadurch gekennzeichnet, daß** mindestens an einem Teil der Halteanker (19) jeweils die Endglieder (20) zweier Schrägkettenstrangstücke (4, 6) angreifen.

11. Gleitschutzvorrichtung nach Anspruch 2 oder Anspruch 2 und einem der Ansprüche 4 bis 10, **dadurch gekennzeichnet, daß** der Draht (18) aus Federstahl besteht.

12. Gleitschutzvorrichtung nach Anspruch 2 oder Anspruch 2 und einem der Ansprüche 4 bis 11, **dadurch gekennzeichnet, daß** der Draht (18) durch Endanschläge (23, 24) gegen Drehbewegungen gegenüber der Scheibe (13) gesichert ist.

## Claims

1. Anti-skid device having running net which is connected by connecting elements at a plurality of connecting points to an inner fixing device (8) and to an outer fixing device which is designed as a disc (13) in the vicinity of the circumference of said inner fixing device, the connecting elements which are assigned to the outer fixing device being designed as end elements (20) of chain elements (4, 6) which are aligned with the edge of the tyre, **characterized in that** the end elements (20) which are assigned to the outer fixing device are connected to fixing fittings (19) which are formed by sections of a wire (18) which is respectively guided and secured on each side of the respective connecting point in guide channels (17) which are arranged in the vicinity of the outer edge (16) of the disc (13).

2. Anti-skid device according to Claim 1, **characterized in that** all the fixing fittings (19) are formed by sections of a continuous strap-shaped wire (18) onto which the end elements (20) are threaded.

3. Anti-skid device according to Claim 1, **characterized in that** the fixing fittings are formed by sections of individual short wire elements.

4. Anti-skid device according to Claim 2 or 3, **characterized in that** the disc (13) is provided in the vicinity of the fixing fittings (19) with cut-outs (15) which are open with respect to the circumference of the disc.

5. Anti-skid device according to one or more of Claims 1 to 4, **characterized in that** the guide channels (17) which are open towards the centre of the disc (13) are formed by webs which run at a constant distance from the outer edge (16) of the disc (13) and have an essentially L-shaped cross section.

6. Anti-skid device according to Claim 5, **characterized in that** a limb, running essentially parallel to the outside of the disc (13), of the webs which form the guide channels (17) is provided with a latching recess (21) for sections of the wire (18).

7. Anti-skid device according to one or more of Claims 1 to 6, **characterized in that** the wire sections which form the fixing fittings (19) are bent at right angles.

8. Anti-skid device according to one or more of Claims 1 to 6, **characterized in that** the wire sections which form the fixing fittings (22) run parallel to the outer edge (16) of the disc (13).

9. Anti-skid device according to one or more of Claims 1 to 8, **characterized in that** the running net has intersections which follow one another along the tread in the rolling direction of the tyre and which are each composed of a longitudinal chain element (3) and four oblique chain elements (4, 5, 6, 7).

10. Anti-skid device according to Claim 8, **characterized in that** in each case the end elements (20) of two oblique chain elements (4, 6) engage on at least some of the fixing fittings (19).

11. Anti-skid device according to Claim 2 or Claim 2 and one of Claims 4 to 10, **characterized in that** the wire (18) is composed of spring steel.

12. Anti-skid device according to Claim 2 or Claim 2 and one of Claims 4 to 11, **characterized in that** the wire (18) is secured against rotary movements with respect to the disc (13) by means of end stops (23, 24).

## Revendications

1. Dispositif anti-patinage comportant un réseau de roulement qui est relié par des organes de liaison à plusieurs emplacements de liaison à une fixation interne (8) et à une fixation extérieure constituée par un disque (13) dans la région de sa périphérie , dans lequel les organes de liaison agencés sur la fixation extérieure sont constitués par des organes terminaux (20) formés de pièces de tronçons de chaînes (4, 6) orientés perpendiculairement au flanc du pneumatique, **caractérisé en ce que** les organes terminaux (20) agencés sur la fixation extérieure sont reliés à des ancres de maintien (19) formées par des sections d'un fil (18), lequel est guidé et maintenu des deux côtés de l'emplacement de liaison correspondant dans des canaux de guidage (17) agencés dans le voisinage du bord extérieur (16) du disque (13).

2. Dispositif anti-patinage selon la revendication 1 **caractérisé en ce que** l'ensemble des ancres de maintien (19) est constitué par des segments d'un fil continu (18) en forme d'étrier sur lequel les organes terminaux (20) sont enfilés.

3. Dispositif anti-patinage selon la revendication 1 **caractérisé en ce que** les ancres de maintien sont constituées par des segments de différentes pièces courtes de fil.

4. Dispositif anti-patinage selon la revendication 2 ou 3 **caractérisé en ce que** le disque (13) est pourvu d'entailles ouvertes (15) sur sa périphérie dans la région des ancres de maintien (19).

5. Dispositif anti-patinage selon l'une quelconque des revendications précédentes **caractérisé en ce que** les canaux de guidage (17) ouverts vers le centre du disque (13) sont formés par des pattes s'étendant à intervalle constant de la bordure extérieure (16) du disque (13) et qui présentent une section transversale sensiblement en forme de L.

6. Dispositif anti-patinage selon la revendication 5 **caractérisé en ce qu'**une branche sensiblement parallèle au côté extérieur du disque (13), formant les pattes constitutives des canaux de guidage (17), est munie d'une cuvette d'accrochage (21) pour des segments du fil (18).

7. Dispositif anti-patinage selon l'une quelconque des revendications 1 à 6 **caractérisé en ce que** les segments de fil formant les ancres de maintien (19) sont coudés.

8. Dispositif anti-patinage selon l'une quelconque des revendications 1 à 6 **caractérisé en ce que** les sections de fil (22) formant les ancres de maintien s'étendent parallèlement au bord extérieur (16) du disque (13).

9. Dispositif anti-patinage selon l'une quelconque des revendications 1 à 8 **caractérisé en ce que** le réseau de roulement comporte des croix d'appui se succédant dans la direction de roulement du pneumatique, qui sont chacune composées d'une pièce de tronçon de chaîne longitudinale (3) et de quatre pièces de tronçons de chaîne inclinées (4, 5, 6, 7).

10. Dispositif anti-patinage selon la revendication 8 **caractérisé en ce qu'**au moins une partie des ancres de maintien (19) saisissent les organes terminaux (20) de deux pièces de tronçons de chaîne inclinés (4, 6).

11. Dispositif anti-patinage selon la revendication 2 ou 2 et l'une des revendications 4 à 10 **caractérisé en ce que** le fil (18) est constitué en acier à ressort.

12. Dispositif anti-patinage selon l'une des revendications 2 ou 2 et l'une des revendications 4 à 11 **caractérisé en ce que** le fil (18) est prémuni par des butées terminales (23, 24) contre des mouvements de rotation par rapport au disque (13)
